# FASCICULE DE BREVET EUROPEEN

(11) **EP 2 038 534 B1**
(45) Date de publication et mention de la délivrance du brevet: **14.10.2009**
(21) Numéro de dépôt: 07803840.3
(22) Date de dépôt: 04.07.2007
(51) Int. Cl.: F02C 7/04, F02K 3/06

(54) **TURBOMOTEUR POUR AÉRONEF**
TRIEBWERK FÜR EIN FLUGZEUG
TURBINE ENGINE FOR AIRCRAFT

(30) Priorité: 12.07.2006 FR 0606337
(43) Date de publication de la demande: 25.03.2009
(73) Titulaire: AIRBUS OPERATIONS, 31060 Toulouse (FR)
(72) Inventeur: PORTE, Alain, F-31770 Colomiers (FR); GANTIE, Fabrice, F-31000 Toulouse (FR); CHELIN, Frédéric, F-32430 Encausse (FR); OBERLE, Patrick, F-82600 Verdun Sur Garonne (FR)
(74) Mandataire: Bonnetat, Christian
(86) Numéro de dépôt international: PCT/FR2007/001134
(87) Numéro de publication internationale: WO 2008/006961

(56) Documents cités:
- EP-A- 1 591 643
- EP-A- 1 621 752
- US-A- 3 542 152

## Description

La présente invention concerne les turbomoteurs pour aéronef et, plus spécialement, l'entrée d'air et le carter de soufflante d'un tel turbomoteur.

Dans les turbomoteurs connus, la paroi interne de l'entrée d'air et le carter de la soufflante sont métalliques et l'extrémité arrière de ladite paroi interne de l'entrée d'air et l'extrémité avant dudit carter de soufflante portent des brides périphériques saillantes coopérantes permettant leur solidarisation à l'aide d'éléments de fixation (vis, boulons, ...) traversant lesdites brides. Un turbomoteur selon l'art antérieur est présenté dans le document US 3 542 152.

Etant donné les propriétés mécaniques, thermiques et massiques des matières composites fibres/résine, il serait avantageux de pouvoir réaliser entièrement ladite paroi interne de l'entrée d'air et ledit carter de soufflante sous la forme de pièces d'une telle matière composite. Toutefois, les essais effectués dans ce sens ne se sont pas révélés intéressants du fait que, à l'usage, il se produit un délaminage des fibres au niveau du coude de raccord à 90° entre lesdites brides périphériques et le reste tubulaire de ladite paroi interne et dudit carter, délaminage qui entraîne une baisse importante de la résistance mécanique desdites pièces et même la rupture de ces dernières.

La présente invention a pour objet de remédier à cet inconvénient. A cette fin, selon l'invention, le turbomoteur pour aéronef présentant un axe longitudinal et comportant :
- une entrée d'air, pourvue d'une paroi interne tubulaire ; et
- une soufflante, alimentée en air par ladite entrée d'air et enfermée dans un carter, également tubulaire,
est remarquable en ce que ladite paroi interne de l'entrée d'air et le carter de la soufflante forment une unique pièce tubulaire, réalisée en une matière composite fibres/résine.

Ainsi, grâce à la présente invention, on élimine les brides respectivement disposées à l'extrémité arrière de la paroi interne de l'entrée d'air et à l'extrémité avant du carter de la soufflante. Les inconvénients, liés à la présence de ces brides et mentionnés ci-dessus, sont donc entièrement éliminés. De plus, on obtient un ensemble intégré paroi interne d'entrée d'air / carter de soufflante particulièrement avantageux en ce qui concerne la masse et le coût.

Ladite pièce unique tubulaire composite peut être réalisée à l'aide de fibres de carbone, de bore, de verre, de carbure de silicium, etc ..., les fibres de carbone étant toutefois préférées. Cette pièce peut être obtenue par tout procédé connu (enroulement filamentaire, bobinage, dépose de fibres imprégnées ou de tissus imprégnés, etc ...).

A son extrémité arrière, ladite pièce tubulaire composite peut être reliée, par une bride et des boulons, au capot externe du canal de soufflante dudit turbomoteur.

Dans ce cas, il est avantageux, pour éviter les inconvénients de délaminage mentionnés ci-dessus, que l'extrémité arrière de ladite pièce tubulaire composite soit uniforme et que ladite bride soit rapportée et fixée à ladite extrémité arrière.
Les figures du dessin annexé feront bien comprendre comment l'invention peut être réalisée. Sur ces figures, des références identiques désignent des éléments semblables.
La figure 1 montre, en demi-coupe schématique partielle, la partie avant d'un turbomoteur connu.
La figure 2 montre, également en demi-coupe schématique partielle, un exemple de solidarisation entre l'extrémité arrière de l'entrée d'air et l'extrémité avant du carter de soufflante, dans le turbomoteur connu de la figure 1.
La figure 3 montre, en vue semblable à la figure 1, la partie avant d'un turbomoteur conforme à la présente invention.
La figure 4 montre, en coupe agrandie partielle comparable à la figure 2, la pièce composite tubulaire unique formant la paroi interne de l'entrée d'air et le capot de la soufflante du turbomoteur de la figure 3.
La figure 5 illustre, en coupe agrandie partielle, la liaison entre ladite pièce composite tubulaire unique et le capot externe du canal de soufflante.

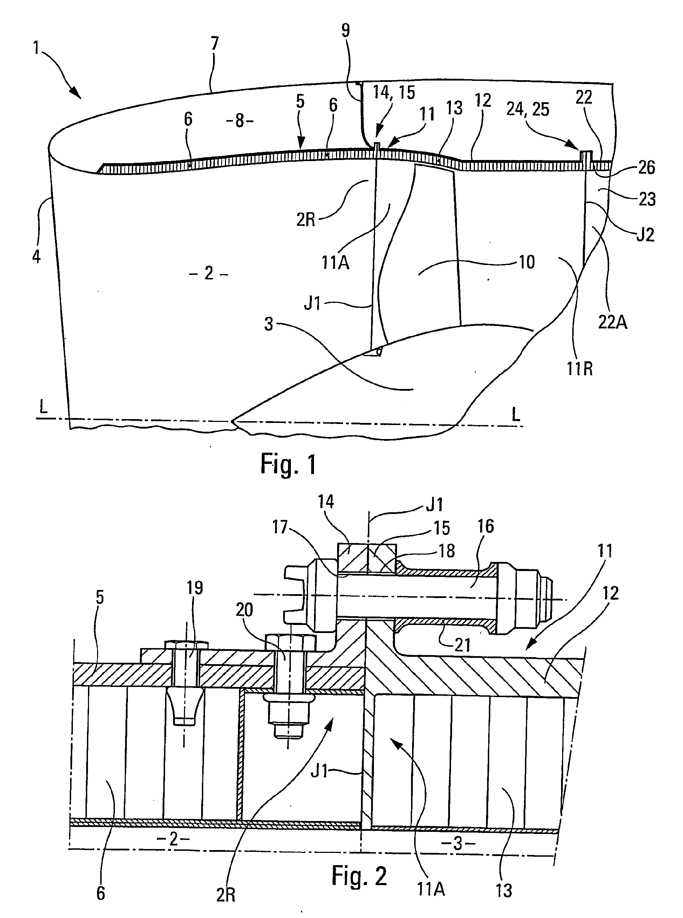

Le turbomoteur de type connu 1, dont la partie avant est schématiquement et partiellement montrée par la figure 1, comporte un axe longitudinal L-L. Cette partie avant comporte essentiellement une entrée d'air tubulaire 2 et une soufflante 3.

L'entrée d'air tubulaire 2 présente un bord d'attaque 4 et elle est pourvue d'une paroi interne tubulaire métallique 5, par exemple en aluminium, portant intérieurement un revêtement tubulaire d'atténuation acoustique 6. Un capot externe 7 entoure ladite entrée d'air et délimite avec ladite paroi interne 5 une chambre 8 à section annulaire, obturée par une cloison arrière annulaire 9 du côté opposé audit bord d'attaque 4.

La soufflante 3 comporte des pales 10 et est entourée par un carter de soufflante 11 constitué par une pièce tubulaire métallique 12, par exemple en aluminium, et portant intérieurement un revêtement tubulaire d'atténuation acoustique 13.

L'extrémité arrière 2R de l'entrée d'air 2 et l'extrémité avant 11A du carter de soufflante 11 sont assemblées l'une à l'autre le long d'un plan de joint J1.

Comme cela est montré à grande échelle sur la figure 2, l'assemblage des extrémités arrière 2R et avant 11A est obtenu par deux brides annulaires coopérantes 14 et 15 faisant saillie vers l'extérieur de la paroi interne 5 et de la pièce tubulaire 12 et pressées l'une contre l'autre par des boulons 16 traversant des perçages 17 et 18 en regard, pratiqués dans lesdites brides 14 et 15. Dans l'exemple de réalisation connu de la figure 2, la bride annulaire 14 est rapportée à la paroi interne 5 et est solidarisée de celle-ci par des boulons 19 et 20. Au contraire, dans cet exemple, la bride 15 est usinée d'une seule pièce avec la pièce tubulaire 12.

Par ailleurs, à chaque boulon 16 est associée une bague 21, traversée par ledit boulon 16 et solidarisée par lui de la bride 15. Les bagues 21 sont réalisées de façon à pouvoir être comprimées axialement de façon plastique. Ainsi, lorsqu'une pale 10 de la soufflante 3 se brise et vient heurter le carter 11, l'énergie de la percussion peut être au moins en partie absorbée par lesdites bagues 21.

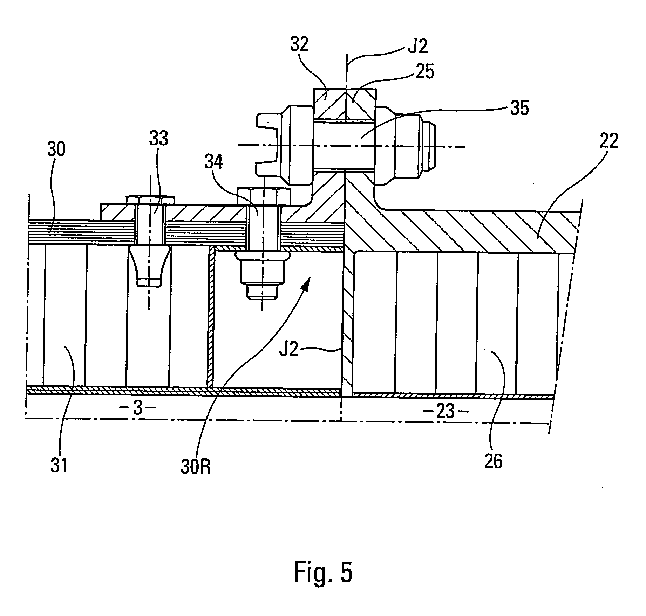

A son extrémité arrière 11R, le carter de soufflante 11 est assemblé à l'extrémité avant 22A du capot externe 22 du canal de soufflante 23, le long d'un plan de joint J2. Un tel assemblage est obtenu par l'intermédiaire d'un système de brides 24, 25 semblable au système de brides 14, 15, la bride 24 portée par la pièce tubulaire 12, étant par exemple identique à la bride 1 5 et la bride 25 du capot externe 22 pouvant présenter toute forme appropriée (voir la figure 5). Bien entendu, des boulons (non représentés) sont prévus pour assembler lesdites brides 24 et 25.

Le capot externe de soufflante 22 porte intérieurement un revêtement tubulaire d'atténuation acoustique 26.

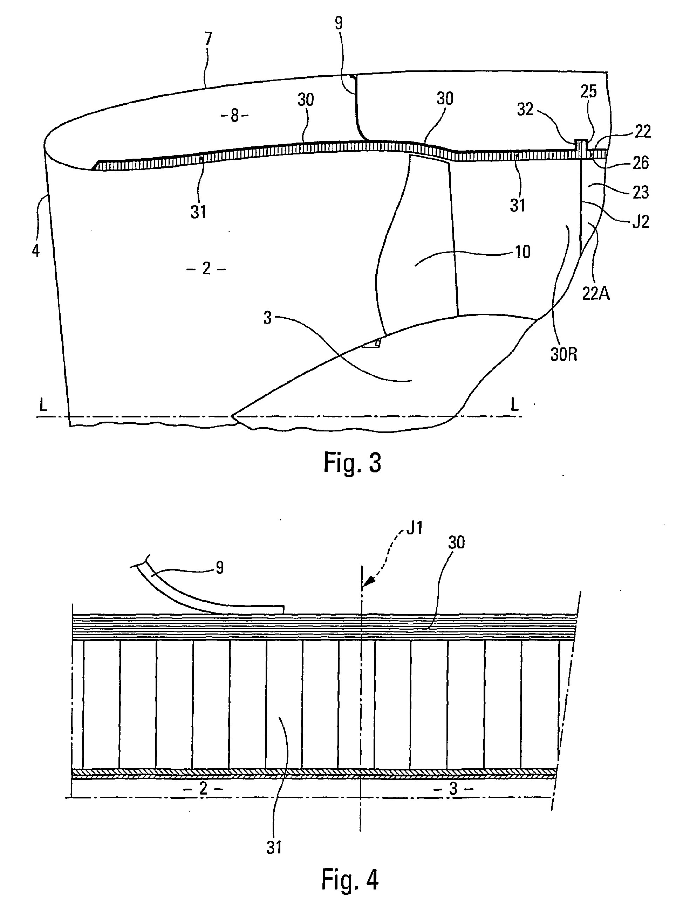

Sur la figure 3, qui représente schématiquement la partie avant du moteur conforme à la présente invention, on retrouve les éléments 2 à 4, 7 à 10, 22, 22A, 23, 25, 26 et J2 décrits ci-dessus. En revanche, la paroi interne 5 de l'entrée d'air 2 et le carter de soufflante 11 ont été remplacés par une unique pièce tubulaire 30 de matière composite fibres/résine portant intérieurement un revêtement tubulaire d'atténuation acoustique 31, remplaçant les revêtements 6 et 13 (voir également la figure 4). Il en résulte que les brides 14, 15, les boulons 16, 19, 20 et le plan de joint J1 ont été éliminés. Sur la figure 4, on a indiqué la trace que le plan de joint J1 aurait s'il n'avait été supprimé.

A l'extrémité arrière 30R de la pièce 30, est prévue une bride 32, destinée à coopérer avec la bride 25 du capot externe 22 du canal de soufflante 23, pour solidariser ladite pièce 30 dudit capot.

Comme on peut le voir sur la figure 5, la bride 32 est constituée par une couronne rapportée à l'extrémité arrière uniforme 30R de ladite pièce 30 et fixée à celle-ci par des boulons 33, 34. Des boulons 35 assurent la solidarisation des brides 25 et 32, et donc celle de la pièce tubulaire 30 et du capot 22 du canal de soufflante.

On remarquera que, en cas de rupture d'une pale 10 de la soufflante 3 et de percussion de cette pale brisée contre la pièce 30, celle-ci est, par forme et par nature, apte à absorber l'énergie de la percussion.

Par ailleurs, on notera que le revêtement tubulaire 31 peut comporter différentes zones adaptées à leur emplacement par rapport au moteur. Par exemple, le revêtement tubulaire 31 peut être de nature :
- purement acoustique dans l'entrée d'air 2,
- acoustique et ablative en regard des pales 10 de la soufflante 3 (pour prendre en compte la dilatation desdites pales), et
- acoustique et mécaniquement résistante en arrière desdites pales 10 (pour résister à des impacts d'objets, tels que des morceaux de glace, se détachant desdites pales).

On remarquera en outre que l'entrée d'air conforme à la présente invention ne présente aucune rupture d'impédance, ce qui permet d'améliorer l'atténuation globale du traitement acoustique.

## Revendications

1. Turbomoteur pour aéronef comportant :
- une entrée d'air (2), pourvue d'une paroi interne tubulaire ; et
- une soufflante (3), alimentée en air par ladite entrée d'air et enfermée dans un carter, également tubulaire,
**caractérisé en ce que** ladite paroi interne de l'entrée d'air et ledit carter de la soufflante forment une unique pièce tubulaire (30), réalisée en une matière composite fibres/résine.

2. Turbomoteur selon la revendication 1,
**caractérisé en ce que** ladite matière composite est à base de fibres de carbone.

3. Turbomoteur selon l'une des revendications 1 ou 2,
**caractérisé en ce que**, à son extrémité arrière (30R), ladite pièce tubulaire (30) de matière composite est reliée par une bride (32) et des boulons (35) au capot externe (22) du canal de soufflante (23).

4. Turbomoteur selon la revendication 3,
**caractérisé en ce que** l'extrémité arrière (30R) de ladite pièce tubulaire (30) est uniforme et **en ce que** ladite bride (32) est rapportée et fixée à ladite extrémité arrière (30R).

## Claims

1. Aircraft turbine engine comprising:
- an air intake (2), provided with a tubular internal wall; and
- a fan (3) supplied with air by said air intake and enclosed in a casing, also tubular,
**characterized in that** said internal wall of the air intake and said fan casing form a single tubular component (30) made of a resin/fiber composite.

2. Turbine engine according to Claim 1,
**characterized in that** said composite is based on carbon fiber.

3. Turbine engine according to one of Claims 1 or 2,
**characterized in that**, at its rear end (30R), said tubular component (30) made of composite is connected by a flange (32) and bolts (35) to the external cowl (22) of the fan duct (23).

4. Turbine engine according to Claim 3,
**characterized in that** the rear end (30R) of said tubular component (30) is uniform and **in that** said flange (32) is attached and fixed to said rear end (30R).

## Patentansprüche

1. Triebwerk für ein Flugzeug, Folgendes umfassend :
- einen mit einer röhrenförmigen Innenwandung ausgestatteten Lufteinlass (2),
- ein Gebläse (3), das durch den Lufteinlass mit Luft versorgt wird und von einem ebenfalls röhrenförmigen Gehäuse umschlossen ist,
**dadurch gekennzeichnet, dass** die Innenwandung des Lufteinlasses und das Gebläsegehäuse ein einziges, aus einem Faser-Harz-Verbundwerkstoff hergestelltes, röhrenförmiges Teil (30) bilden.

2. Triebwerk nach Anspruch 1,
**dadurch gekennzeichnet, dass** der Verbundwerkstoff ein Kohlenfaserverbundwerkstoff ist.

3. Triebwerk nach Anspruch 1 oder 2,
**dadurch gekennzeichnet, dass** das röhrenförmige Teil (30) aus Verbundwerkstoff an seinem hinteren Ende (30R) durch einen Flansch (32) und Bolzen (35) mit der Außenhaube (22) des Fanströmungskanals (23) verbunden ist.

4. Triebwerk nach Anspruch 3,
**dadurch gekennzeichnet, dass** das hintere Ende (30R) des röhrenförmigen Teils (30) einheitlich ist und **dadurch**, das der Flansch (32) an das hintere Ende (30R) angeformt und an diesem befestigt ist.
